# EUROPEAN PATENT SPECIFICATION

(11) **EP 4 248 036 B1**
(45) Date of publication and mention of the grant of the patent: **29.07.2026**
(21) Application number: 21823670.1
(22) Date of filing: 19.11.2021
(51) Int. Cl.: E04H 6/02, H02S 20/23, B60L 53/51

(54) **SHELTER FOR VEHICLES**
SCHUTZRAUM FÜR FAHRZEUGE
ABRI POUR VÉHICULES

(30) Priority: 23.11.2020 IT 202000028088
(43) Date of publication of application: 27.09.2023
(73) Proprietor: Solerzia S.r.l., 06034 Foligno (PG) (IT)
(72) Inventor: FALCHETTI, Gianni, 06034 Foligno PG (IT)
(74) Representative: Praxi Intellectual Property Milano
(86) International application number: PCT/IB2021/060757
(87) International publication number: WO 2022/107071

(56) References cited:
- EP-A1- 2 769 869
- FR-A1- 3 093 964
- US-A1- 2011 030 285

## Description

The present invention relates to a shelter for a motor vehicle. Such shelters are typically made with canopies, and have the function of sheltering the vehicle from atmospheric events while parking. In particular, the use of such shelters is particularly advantageous to keep vehicles shaded in the summer months, so as to avoid excessive overheating, in particular in public or private parking areas. Such parking areas can be located, for example, in motorway service areas, in accommodation facilities such as hotels or restaurants or in any other place where it is necessary to allow the parking of motor vehicles.

The use of canopies to protect cars from the sun is known in the state of the art. Such canopies typically comprise a pair of uprights anchored to the ground. The uprights support a cover element which, in use, is placed above the area designed for the parking of one or more vehicles.

Recently, electric traction motor vehicles have also begun to spread. Such vehicles are provided with batteries which need to be recharged while parked. Therefore, canopies equipped with photovoltaic panels have been marketed, able to independently generate part of the electricity necessary for charging vehicles. In this case, the solar panels are connected by means of suitable voltage converters to sockets, usually fixed to the uprights or to separate columns, to which the vehicles will then be connected for charging.

Disadvantageously, it has been found that the yield of the photovoltaic panels is strongly related to the orientation of the canopy. In most cases, it is not possible to ensure a southward orientation of the panels during installation, therefore the performance is often sub-optimal.

Example of further prior art canopies are shown in documents FR 3093964 A1, EP 2769869 A1 and US 2011/030285.

### SUMMARY OF THE INVENTION

In this context, the technical task underlying the present invention is to propose a shelter for vehicles which overcomes the drawbacks of the prior art mentioned above.

In particular, it is an object of the present invention to provide a shelter for vehicles able to significantly improve the performance of the photovoltaic panels installed on the cover.

The mentioned technical task and the specified aims are substantially achieved by a shelter for vehicles comprising the technical features set out in one or more of the appended claims.

In particular, a shelter according to the present invention is of the type adapted to cover at least one parking area of a vehicle. The parking area has a vehicle entry/exit direction. The shelter comprises at least one pair of columns configured to be arranged on opposite sides of the vehicle entry/exit direction.

The shelter further comprises a cover supported by columns and adapted to shelter a vehicle. The cover has a longitudinal extension direction configured to be arranged substantially parallel to the vehicle entry/exit direction. The cover comprises at least one photovoltaic panel for generating electric current.

Charging devices are electrically connected to the photovoltaic panel and can be connected to a battery of a vehicle for charging it. In accordance with the present invention, said charging means are housed inside the columns.

The cover has a curved profile along the longitudinal extension direction and a convexity facing the opposite side with respect to the vehicle parking area.

Such a device solves the technical problem as the inventors have found a higher efficiency of the photovoltaic panels with any orientation of the cover other than the southward orientation. Such improved performance is mainly due to the curvature of the cover.

### LIST OF FIGURES

Further features and advantages of the present invention will become more apparent from the description of an exemplary, but not exclusive, and therefore nonlimiting preferred embodiment of a shelter for vehicles, as illustrated in the appended figures, in which:
- Figure 1 is a perspective view of a shelter for vehicles according to the present invention, with some parts removed to better show others; and
- Figure 2 is a side view of the shelter of Figure 1.

### DETAILED DESCRIPTION

With reference to the appended figures, 1 refers to a shelter for vehicles according to the present invention. Such a shelter 1 is in particular adapted to cover at least one parking area (not shown) in which a vehicle can park.

In particular, the parking area is generally delimited by horizontal signs according to current regulations. Such an area has a vehicle entry/exit direction. In the present specification, the vehicle is considered as being inserted in the parking spot facing forward, and exits the parking spot in reverse. Of course, such an assumption is made only and exclusively to facilitate the description, and therefore is not to be considered in any way binding.

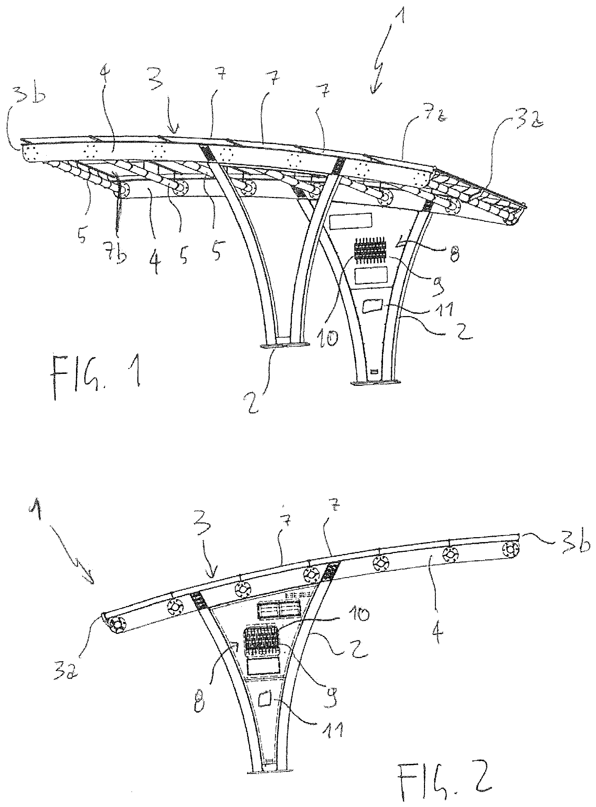

With particular reference to figure 1, the shelter 1 comprises at least one pair of columns 2, which are configured to be arranged on opposite sides of the vehicle entry/exit direction. In other words, when the vehicle is parked correctly it is arranged between the columns 2. The columns 2 can be anchored to metal bases. Depending on the installation area, the metal bases can completely replace the reinforced concrete foundations.

A cover 3, adapted to shelter a vehicle, is supported by the columns 2. Such a cover 3 has a longitudinal extension direction configured to be arranged substantially parallel to the vehicle entry/exit direction. The cover 3 has a front side 3a and a rear side 3b. It should be noted that, in accordance with the present invention, the rear side 3b is placed at a higher height with respect to the front side 3a. When the vehicle is parked, the front side 3a is arranged beyond the front end of the vehicle, while the rear side 3b extends beyond the rear end. Consequently, the cover 3 is able to keep the vehicle shaded as long as the sun is high on the horizon.

In more detail, the cover 3 is defined by a pair of side members 4, each connected to a respective column 2 and oriented along the longitudinal extension direction. A plurality of crossbeams 5 are arranged between the side members 4, preferably parallel to each other and even more preferably equally spaced. If necessary, one or more reinforcement beams 6 are arranged parallel to the side members 4.

It should be noted that the cover 3 comprises at least one photovoltaic panel 7, adapted to generate electric current. Preferably, the cover 3 comprises a plurality of photovoltaic panels 7, arranged so as to completely cover the space between the side members 4.

The photovoltaic panels 7 have a lower side 7a facing the vehicle and an upper side 7b opposite the lower side 7a. The photovoltaic panels 7 are of the type known to the person skilled in the art, however, unlike conventional photovoltaic panels, the photovoltaic panels 7 according to the present invention can have photovoltaic cells arranged on both sides 7a, 7b. Advantageously, this allows the cover 3 to generate more electricity, since the lower sides 7b are also able to generate electricity as they are struck by the solar radiation reflected by the environment.

In the preferred embodiment, the photovoltaic panels 7 are arranged in six rows of three panels each. Each row has an inclination of 2° with respect to the previous one thus forming, by virtue of connecting elements (not shown), a curvilinear profile.

The fixing system of the photovoltaic panels 7 to the cover 3 is made with an innovative system which uses longitudinal frames (upper and lower cups, not illustrated) such as to block the photovoltaic panels 7 and at the same time ensure, through plastic seals (not shown), a seal to water and atmospheric agents. The system has clear advantages in terms of speed of assembly with respect to the traditional canopies, allowing real savings in installation costs.

In accordance with the present invention, in the preferred embodiment the cover 3 has a curved profile along the longitudinal extension direction, and a convexity facing the opposite side with respect to the vehicle parking area.

In an alternative embodiment, not shown, the cover 3 has a concavity facing the opposite side with respect to the vehicle parking area. Advantageously, thereby the shelter 1 is able to collect and accumulate rainwater.

As already mentioned, the front side 3a is placed lower with respect to the upper side 3b, so the cord of the cover 3 is inclined with respect to a horizontal direction.

According to one aspect of the present invention, the above-mentioned columns 2 are connected to the cover 3 at a point between 10% and 30% of the cord, starting from the front side 3a. Advantageously, this minimizes the possibility of interference between the columns 2 and the front doors of the vehicle, when properly parked.

Since the columns 2 are tapered, i.e., they have a section which narrows from the cover 3 to the ground, the point of attachment to the respective side member 4 is identified by the median axis of the column 2.

In accordance with the present invention, the shelter 1 comprises charging means 8 of a battery of a motor vehicle, electrically connected to the photovoltaic panels 7 and connectable to the vehicle. In accordance with the present invention, said charging means 8 are housed inside the columns 2. In particular, at least one of the columns 2 a housing 9 placed near the cover 3. In particular, the charging means 8 comprise electrical conversion means 10 inserted inside the housing. The electrical conversion means 10 comprise, merely by way of example, an inverter and its control electronics, known per se to the person skilled in the art.

It should be noted that the charging means 8 comprise at least one power socket 11 for electric vehicles. Such a socket 11, preferably electrically connected to both the photovoltaic panels 7 and to the grid, is in particular integrated in a column 2, even more particularly at a height which is easy to reach by the user.

## Claims

1. Shelter (1) of the type adapted to cover at least one parking area of a vehicle, said parking area having a vehicle entry/exit direction, the shelter (1) comprising:
- at least one pair of columns (2) configured to be arranged on opposite sides of the vehicle entry/exit direction;
- a cover (3) supported by the columns (2), adapted to shelter a vehicle and having a longitudinal extension direction configured to be arranged substantially parallel to the vehicle entry/exit direction, said cover (3) comprising at least one photovoltaic panel (7) for generating electric current;
- charging means (8) electrically connected to the photovoltaic panel (7) and connectable to a vehicle battery for charging it;
wherein the cover (3) has a curved profile along the longitudinal extension direction and a convexity facing the opposite side with respect to the vehicle parking area; **characterized in that** the charging means (8) are housed inside the columns (2).

2. Shelter (1) according to the preceding claim, wherein the cover (3) has a front side (3a) and a rear side (3b) positioned at a higher height than the front side (3a).

3. Shelter (1) according to the preceding claim, wherein the cover (3) has a cord which is inclined with respect to a horizontal direction.

4. Shelter (1) according to any one of the preceding claims, wherein the columns (2) are connected to the cover (3) at a point between 10% and 30% of the cord, starting from the front side (3a).

5. Shelter (1) according to any one of the preceding claims, wherein the columns (2) have a tapered profile from the cover (3) to the base.

6. Shelter (1) according to any one of the preceding claims, wherein at least one column (2) has a housing (9) located near the cover (3), said charging means (8) comprising electrical conversion means (10) inserted inside said housing (9).

7. Shelter (1) according to any one of the preceding claims, wherein the charging means (8) comprise at least one power socket (11) for electric automobiles integrated in a respective column (2).

8. Shelter (1) according to any one of the preceding claims, wherein the columns (2) have a curved profile.

9. Shelter (1) according to any one of the preceding claims, wherein the photovoltaic panels (7) have a lower side (7a) facing the vehicle and an upper side (7b) opposite the lower side (7a), said photovoltaic panels (7) comprising a plurality of photovoltaic cells arranged on both sides (7a, 7b).

## Patentansprüche

1. Unterstand (1) der Art, die dazu ausgebildet ist, mindestens eine Parkfläche eines Fahrzeugs zu überdachen, wobei die Parkfläche eine Fahrzeugein-/ausfahrtsrichtung aufweist, der Unterstand (1) umfassend:
- mindestens ein Paar Säulen (2), das konfiguriert ist, um auf gegenüberliegenden Seiten der Fahrzeugein-/ausfahrtsrichtung angeordnet zu sein;
- eine von den Säulen (2) getragene Abdeckung (3), die dazu ausgebildet ist, ein Fahrzeug zu überdachen, und eine Längserstreckungsrichtung aufweist, die konfiguriert ist, um im Wesentlichen parallel zur Fahrzeugein-/ausfahrtsrichtung angeordnet zu sein, wobei die Abdeckung (3) mindestens ein Photovoltaikpaneel (7) zum Erzeugen von elektrischem Strom umfasst;
- Lademittel (8), die elektrisch mit dem Photovoltaikpaneel (7) verbunden sind und mit einer Fahrzeugbatterie verbindbar sind, um diese zu laden;
wobei die Abdeckung (3) ein gekrümmtes Profil entlang der Längserstreckungsrichtung und eine Konvexität, die in Bezug auf die Fahrzeugparkfläche der gegenüberliegenden Seite zugewandt ist, aufweist;
**dadurch gekennzeichnet, dass** die Lademittel (8) in den Säulen (2) untergebracht sind.

2. Unterstand (1) nach dem vorstehenden Anspruch, wobei die Abdeckung (3) eine Vorderseite (3a) und eine Rückseite (3b), die in einer größeren Höhe als die Vorderseite (3a) positioniert ist, aufweist.

3. Unterstand (1) nach dem vorstehenden Anspruch, wobei die Abdeckung (3) ein Seil aufweist, das in Bezug auf eine horizontale Richtung geneigt ist.

4. Unterstand (1) nach einem der vorstehenden Ansprüche, wobei die Säulen (2) mit der Abdeckung (3) an einem Punkt zwischen 10 % und 30 % des Seils, ausgehend von der Vorderseite (3a), verbunden sind.

5. Unterstand (1) nach einem der vorstehenden Ansprüche, wobei die Säulen (2) von der Abdeckung (3) zur Basis ein verjüngtes Profil aufweisen.

6. Unterstand (1) nach einem der vorstehenden Ansprüche, wobei mindestens eine Säule (2) ein Gehäuse (9) aufweist, das nahe der Abdeckung (3) angeordnet ist, wobei die Lademittel (8) elektrische Umwandlungsmittel (10) umfassen, die in das Gehäuse (9) eingesetzt sind.

7. Unterstand (1) nach einem der vorstehenden Ansprüche, wobei die Lademittel (8) mindestens eine in eine jeweilige Säule (2) integrierte Steckdose (11) für Elektroautos umfassen.

8. Unterstand (1) nach einem der vorstehenden Ansprüche, wobei die Säulen (2) ein gekrümmtes Profil aufweisen.

9. Unterstand (1) nach einem der vorstehenden Ansprüche, wobei die Photovoltaikpaneele (7) eine dem Fahrzeug zugewandte Unterseite (7a) und eine der Unterseite (7a) gegenüberliegende Oberseite (7b) aufweisen, wobei die Photovoltaikpaneele (7) eine Vielzahl von Photovoltaikzellen umfassen, die auf beiden Seiten (7a, 7b) angeordnet sind.

## Revendications

1. Abri (1) du type adapté à couvrir au moins une zone de stationnement d'un véhicule, ladite zone de stationnement ayant une direction d'entrée/sortie de véhicule, l'abri (1) comprenant :
- au moins une paire de colonnes (2) conçues pour être agencées sur des côtés opposés de la direction d'entrée/sortie de véhicule ;
- une couverture (3) supportée par les colonnes (2), adaptée à abriter un véhicule et ayant une direction d'extension longitudinale conçue pour être agencée sensiblement parallèlement à la direction d'entrée/sortie de véhicule, ladite couverture (3) comprenant au moins un panneau photovoltaïque (7) pour générer du courant électrique ;
- un moyen de charge (8) connecté électriquement au panneau photovoltaïque (7) et pouvant être connecté à une batterie de véhicule pour la charger ;
dans lequel la couverture (3) a un profil incurvé le long de la direction d'extension longitudinale et une convexité orientée vers le côté opposé par rapport à la zone de stationnement de véhicule ;
**caractérisé en ce que** le moyen de charge (8) est logé à l'intérieur des colonnes (2).

2. Abri (1) selon la revendication précédente, dans lequel la couverture (3) a une face avant (3a) et une face arrière (3b) positionnées à une hauteur plus élevée que la face avant (3a).

3. Abri (1) selon la revendication précédente, dans lequel la couverture (3) a un cordon qui est incliné par rapport à une direction horizontale.

4. Abri (1) selon l'une quelconque des revendications précédentes, dans lequel les colonnes (2) sont reliées à la couverture (3) au niveau d'un point compris entre 10 % et 30 % du cordon, en partant de la face avant (3a).

5. Abri (1) selon l'une quelconque des revendications précédentes, dans lequel les colonnes (2) ont un profil effilé depuis la couverture (3) jusqu'à la base.

6. Abri (1) selon l'une quelconque des revendications précédentes, dans lequel au moins une colonne (2) a un boîtier (9) situé près de la couverture (3), ledit moyen de charge (8) comprenant un moyen de conversion électrique (10) inséré à l'intérieur dudit boîtier (9).

7. Abri (1) selon l'une quelconque des revendications précédentes, dans lequel le moyen de charge (8) comprend au moins une prise électrique (11) pour automobiles électriques intégrée dans une colonne (2) respective.

8. Abri (1) selon l'une quelconque des revendications précédentes, dans lequel les colonnes (2) ont un profil incurvé.

9. Abri (1) selon l'une quelconque des revendications précédentes, dans lequel les panneaux photovoltaïques (7) ont un côté inférieur (7a) étant orienté vers le véhicule et un côté supérieur (7b) opposé au côté inférieur (7a), lesdits panneaux photovoltaïques (7) comprenant une pluralité de cellules photovoltaïques agencées de part et d'autre (7a, 7b).
